# EUROPEAN PATENT APPLICATION

(11) **EP 4 534 385 A1**
(43) Date of publication of application: **09.04.2025**
(21) Application number: 23858995.6
(22) Date of filing: 26.07.2023
(51) Int. Cl.: B62D 1/06

(54) **STEERING WHEEL AND VEHICLE**

(30) Priority: 29.08.2022 CN 202211042497
(71) Applicant: Zhejiang Liankong Technologies Co., Ltd., Ningbo, Zhejiang 315336 (CN); Zhejiang Geely Holding Group Co., Ltd., Hangzhou, Zhejiang 310051 (CN)
(72) Inventor: LUO, Lixin, Hangzhou Bay New District Ningbo, Zhejiang 315336 (CN); MA, Zuguo, Hangzhou Bay New District Ningbo, Zhejiang 315336 (CN); BIAN, Jianfeng, Hangzhou Bay New District Ningbo, Zhejiang 315336 (CN)
(74) Representative: Kraus & Lederer PartGmbB
(86) International application number: PCT/CN2023/109338
(87) International publication number: WO 2024/045960

(57) **Abstract**

Provided is a steering wheel (100). The steering wheel (100) includes a manipulating body (10), a first grip portion (20), and a second grip portion (30). Each of the first grip portion (20) and the second grip portion (30) has two end portions opposite to each other. A first end portion (21) of the first grip portion (20) and a first end portion (31) of the second grip portion (30) are arranged adjacent to each other and are both rotatably connected to the manipulating body (10). When the first grip portion (20) and the second grip portion (30) are unfolded, a second end portion (23) of the first grip portion (20) and a second end portion (33) of the second grip portion (30) move away from each other. When the first grip portion (20) and the second grip portion (30) are folded, the second end portion (23) of the first grip portion (20) and the second end portion (33) of the second grip portion (30) move towards each other.

## Description

### FIELD

The present disclosure relates to the field of vehicles, and in particular, to a steering wheel and a vehicle.

### BACKGROUND

A steering wheel is a control component of a vehicle such as a car, which can control a driving direction of the vehicle. Generally, the steering wheel has a fixed shape and occupies a large space. The driver is prone to interfere with the steering wheel when entering and exiting a cockpit, which is not favorable to the driver's driving experience. Therefore, how to reduce the space occupied by the steering wheel has become a continuous technical problem for technicians to study.

### SUMMARY

The present disclosure provides a steering wheel and a vehicle.

The steering wheel of the present disclosure includes a manipulating body, a first grip portion, and a second grip portion. Each of the first grip portion and the second grip portion has two end portions opposite to each other. A first end portion of the first grip portion and a first end portion of the second grip portion are arranged adjacent to each other and are both rotatably connected to the manipulating body. When the first grip portion and the second grip portion are unfolded, a second end portion of the first grip portion and a second end portion of the second grip portion move away from each other. When the first grip portion and the second grip portion are folded, the second end portion of the first grip portion and the second end portion of the second grip portion move towards each other.

In the steering wheel of the present disclosure, the steering wheel can be unfolded or folded through a rotational connection between the manipulating body and each of the first grip portion and the second grip portion. At the same time, the first end portion of the first grip portion and the first end portion of the second grip portion are arranged adjacent to each other, and therefore a space occupied by the steering wheel is greatly reduced. Thus, a driver's driving experience is improved.

In some embodiments, when the first grip portion and the second grip portion are in an unfolded state, the first end portion of the first grip portion and the first end portion of the second grip portion abut with each other to restrict the first grip portion and the second grip portion from moving in a direction along which the first grip portion and the second grip portion are further unfolded.

In some embodiments, when the first grip portion and the second grip portion are in a folded state, each of the first grip portion and the second grip portion is abutted against the manipulating body to restrict the first grip portion and the second grip portion from moving in a direction along which the first grip portion and the second grip portion are further folded.

In some embodiments, the steering wheel further includes a limit assembly disposed at the manipulating body. The limit assembly is connected to the first grip portion and the second grip portion. When the first grip portion and the second grip portion are in an unfolded state, the first grip portion and the second grip portion are restricted from moving in a folding direction by the limit assembly. When the first grip portion and the second grip portion are in a folded state, the first grip portion and the second grip portion are restricted from moving in an unfolding direction by the limit assembly.

In some embodiments, the limit assembly includes a movable block movable relative to the first grip portion and the second grip portion. The first grip portion and the second grip portion are restricted from moving in the folding direction by the movable block when the first grip portion and the second grip portion are in the unfolded state.

In some embodiments, the first grip portion is provided with a first limit portion at the first end portion of the first grip portion, and the second grip portion is provided with a second limit portion at the first end portion of the second grip portion. When the first grip portion and the second grip portion are in the unfolded state, the movable block is located between the first limit portion and the second limit portion, and the first grip portion and the second grip portion are restricted from moving in the folding direction by the first limit portion, the second limit portion, and the movable block.

In some embodiments, the first limit portion and/or the second limit portion includes a first protrusion.

In some embodiments, the limit assembly further includes a swing arm rotatably disposed at the manipulating body. The swing arm is pushed to rotate by the movable block during a movement of the movable block. The swing arm is configured to restrict the first grip portion and the second grip portion from moving in the unfolding direction when the first grip portion and the second grip portion are in the folded state.

In some embodiments, the swing arm includes a first arm and a second arm. The first arm and the second arm are arranged at two opposite sides of the movable block, respectively. The movable block is configured to push the first arm to rotate with an end of the first arm close to the movable block and push the second arm to rotate with an end of the second arm close to the movable block during the movement of the movable block. The first grip portion is further provided with a third limit portion spaced apart from the first limit portion, and the second grip portion is further provided with a fourth limit portion spaced apart from the second limit portion. When the first grip portion and the second grip portion are in the folded state, an end of the first arm away from the movable block abuts with the third limit portion to restrict the first grip portion from moving in the unfolding direction, and an end of the second arm away from the movable block abuts with the fourth limit portion to restrict the second grip portion from moving in the unfolding direction.

In some embodiments, the third limit portion and/or the fourth limit portion includes a second protrusion.

In some embodiments, the steering wheel further includes a drive assembly. The drive assembly includes a drive member and a first transmission component. The drive member is configured to drive the movable block to move through the first transmission component.

In some embodiments, the first transmission component includes a cam, an elastic member, and a belt mechanism connected to the drive member and the cam. The drive member is configured to drive the cam to rotate through the belt mechanism, to allow the cam and the elastic member to cooperate with each other to drive the movable block to move.

In some embodiments, the drive assembly further includes a second transmission component. The first grip portion and the second grip portion being driven to be unfolded or folded by the drive member through the second transmission component when the drive member drives the movable block to move.

In some embodiments, the second transmission component includes a first gear and a second gear. The first gear is mounted at the first end portion of the first grip portion and connected to the drive member. The second gear is mounted at the first end portion of the second grip portion and meshed with the first gear.

In some embodiments, the drive member stops operating and rotates reversely when load torque of the drive member exceeds 20% of rated torque.

A vehicle according to the present disclosure includes the steering wheel according to any of the above-mentioned embodiments.

Additional aspects and advantages of the embodiments of present disclosure will be provided at least in part in the following description, or will become apparent in part from the following description, or can be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings.
FIG. 1 is a schematic structural view of a steering wheel according to an embodiment of the present disclosure.
FIG. 2 is a partial cross-sectional view of the steering wheel in direction A of FIG. 1.
FIG. 3 is a schematic structural view of a steering wheel in an unfolded state according to an embodiment of the present disclosure.
FIG. 4 is a schematic view of a partial structure of a steering wheel in an unfolded state according to an embodiment of the present disclosure.
FIG. 5 is an enlarged view of part I of the steering wheel of FIG. 4 at an angle.
FIG. 6 is a schematic structural view of a steering wheel in a folded state according to an embodiment of the present disclosure.
FIG. 7 is a schematic view of a partial structure of a steering wheel in a folded state according to an embodiment of the present disclosure.
FIG. 8 is an enlarged view of part II of the steering wheel of FIG. 7.
FIG. 9 is an enlarged view of the part I of the steering wheel of FIG. 4 at another angle.
FIG. 10 is a schematic view of a partial structure of a steering wheel in an unfolded state according to an embodiment of the present disclosure.
FIG. 11 is a schematic diagram of an operation principle of a drive assembly according to an embodiment of the present disclosure.
FIG. 12 is a schematic plan view of a vehicle according to an embodiment of the present disclosure.

Reference numerals of the components shown in the figures:
steering wheel 100; manipulating body 10; first grip portion 20; second grip portion 30; first end portion 21 of first grip portion; first end portion 31 of second grip portion; second end portion 23 of first grip portion; second end portion 33 of second grip portion; first plate 11; second plate 13; coupling 15; first body 25; second body 35; first abutment portion 210; second abutment portion 310; first flange 16; second flange 17; first side surface 26; second side surface 36; limit assembly 40; movable block 41; first limit portion 211; second limit portion 311; first side wall 410; second side wall 411; first abutment surface 201; swing arm 43; round rod 18; first arm 430; second arm 431; third limit portion 27; fourth limit portion 37; first end 4300 of first arm; first end 4310 of second arm; second end 4301 of the first arm; second end 4311 of the second arm; second abutment surface 301; drive assembly 50; drive member 51; first transmission component 53; cam 530; elastic member 531; belt mechanism 533; protruding end 5301; cam body 5303; top surface 413; second transmission component 55; first protruding block 550; second protruding block 551; first gear 553; second gear 555; gear teeth 400; torque sensor 56; controller 57; drive member sensor 58; vehicle 1000.

### DETAILED DESCRIPTION

Embodiments of the present disclosure are described in detail below, examples of which are illustrated in the accompanying drawings, wherein the same or similar reference numerals throughout represent the same or similar elements or elements with the same or similar functions. The embodiments described below with reference to the drawings are illustrative only, and are intended to explain rather than limit the present disclosure.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "anti-clockwise" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure. In addition, the terms such as "first" and "second" are used herein for purposes of description and are not intended to indicate or imply relative importance, or to implicitly show the number of technical features indicated. Therefore, features defined with "first" and "second" may explicitly or implicitly include one or more of these features. In the description of the present disclosure, "plurality of" means two or more than two, unless specified otherwise.

In the description of the embodiments of the present disclosure, unless specified or limited otherwise, the technical terms "mounted", "connected", and "coupled" are understood broadly, such as fixed, detachable mountings, connections and couplings or integrated, and may be mechanical or electrical mountings, connections and couplings or in mutual communication, and also may be direct and via media indirect mountings, connections, and couplings, and further may be inner mountings, connections and couplings of two components or interaction relations between two components. For those skilled in the art, the specific meaning of the above-mentioned terms in the embodiments of the present disclosure may be understood according to specific circumstances.

In the description of the present disclosure, unless specified or limited otherwise, a first characteristic is "on" or "under" a second characteristic refers to the first characteristic and the second characteristic may be direct or via their another characteristic indirect mountings, connections, and couplings. And, the first characteristic is "on", "above", "over" the second characteristic may refer to the first characteristic is right over the second characteristic or is diagonal above the second characteristic, or just refer to the horizontal height of the first characteristic is higher than the horizontal height of the second characteristic. The first characteristic is "below" or "under" the second characteristic may refer to the first characteristic is right over the second characteristic or is diagonal under the second characteristic, or just refer to the horizontal height of the first characteristic is lower than the horizontal height of the second characteristic.

Many different embodiments or examples according to the present disclosure are used to realize different structures of the present disclosure. To simplify the present disclosure, components and settings in specific examples are described below. Of course, they are merely exemplary and are not intended to limit the present disclosure. Moreover, the present disclosure may repeat reference numbers and/or reference letters in different examples. Such repetition is for purposes of simplicity and clarity and is in itself indicative of a relationship among the various embodiments and/or settings discussed. In addition, the present disclosure provides examples of various specific processes and materials, but those skilled in the art may recognize application of other processes and/or use of other materials.

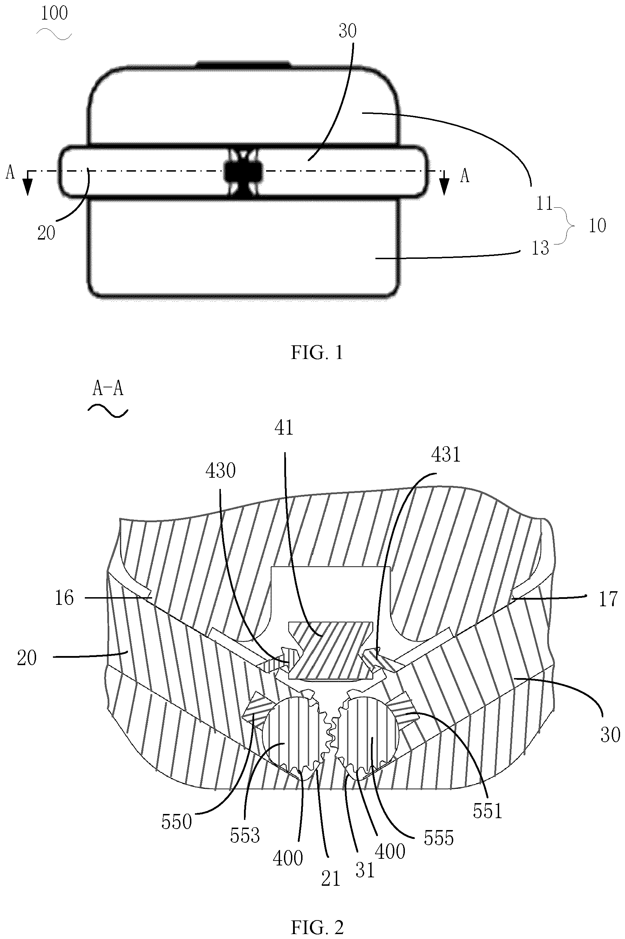

Referring to FIGS. 1 to 4, a steering wheel 100 of the present disclosure includes a manipulating body 10, a first grip portion 20, and a second grip portion 30. Each of the first grip portion 20 and the second grip portion 30 has two ends opposite to each other. A first end portion 21 of the first grip portion 20 and a first end portion 31 of the second grip portion 30 are arranged adjacent to each other and are both rotatably connected to the manipulating body 10. When the first grip portion 20 and the second grip portion 30 are unfolded, a second end portion 23 of the first grip portion 20 and a second end portion 33 of the second grip portion 30 move away from each other. When the first grip portion 20 and the second grip portion 30 are folded, the second end portion 23 of the first grip portion 20 and the second end portion 33 of the second grip portion 30 move towards each other.

In the steering wheel 100 of the present disclosure, the steering wheel 100 can be unfolded or folded through a rotational connection between the manipulating body 10 and each of the first grip portion 20 and the second grip portion 30. At the same time, the first end portion 21 of the first grip portion 20 and the first end portion 31 of the second grip portion 30 are arranged adjacent to each other, and therefore a space occupied by the steering wheel 100 is greatly reduced. Thus, a driver's driving experience is improved.

In one embodiment, the steering wheel 100 may be of a three-layer structure and may be mounted at a lower trim panel of an instrument panel (not shown in the figures). The manipulating body 10 may include a first plate 11 and a second plate 13. The first plate 11 and the second plate 13 are opposite to each other (that is, a projection of the first plate 11 on a horizontal plane is consistent with a projection of the second plate 13 on the horizontal plane), and the first grip portion 20 and the second grip portion 30 may be arranged between the first plate 11 and the second plate 13.

The manipulating body 10 may include a coupling 15. The coupling 15 may include a plurality of couplings. The first end portion 21 of the first grip portion 20 and the first end portion 31 of the second grip portion 30 are an end of the first grip portion 20 connected to the manipulating body 10 and an end of the second grip portion 30 connected to the manipulating body 10, respectively. Each of the first end portion 21 of the first grip portion 20 and the first end portion 31 of the second grip portion 30 may have a mounting hole, and the coupling 15 may pass through the mounting hole. The coupling 15 may have a length greater than a depth of the mounting hole. The first end portion 21 of the first grip portion 20 and the first end portion 31 of the second grip portion 30 may be rotatably connected to the manipulating body 10 through the coupling 15.

The first grip portion 20 and the second grip portion 30 may include a first body 25 and a second body 35, respectively. The first body 25 is connected to the first end portion 21 of the first grip portion 20 and the second end portion 23 of the first grip portion 20, and the first end portion 21 of the first grip portion 20 and the second end portion 23 of the first grip portion 20 are located at two ends of the first body 25, respectively. The second body 35 is connected to the first end portion 31 of the second grip portion 30 and the second end portion 33 of the second grip portion 30, and the first end portion 31 of the second grip portion 30 and the second end portion 33 of the second grip portion 30 are located at two ends of the second body 35, respectively.

Each of the second end portion 23 of the first grip portion 20 and the second end portion 33 of the second grip portion 30 may have an angle with a corresponding one of the first body 25 and the second body 35, to form a feature for the grip not to be released. Thus, the driver's driving experience is improved.

When the first grip portion 20 and the second grip portion 30 are unfolded, the second end portion 23 of the first grip portion 20 and the second end portion 33 of the second grip portion 30 may move away from each other, and a movement trajectory of the second end portion 23 of the first grip portion 20 and a movement trajectory of the second end portion 33 of the second grip portion 30 may be in a same plane and symmetrical about a predetermined axis. At the same time, a maximum distance between the second end portion 23 of the first grip portion 20 and the second end portion 33 of the second grip portion 30 when unfolded may be a limited distance, or float within a controllable limited range, to ensure consistent experience for a user when used.

When the first grip portion 20 and the second grip portion 30 are folded, the second end portion 23 of the first grip portion 20 and the second end portion 33 of the second grip portion 30 move towards each other, and a movement trajectory of the second end portion 23 of the first grip portion 20 and a movement trajectory of the second end portion 33 of the second grip portion 30 may be in a same plane and symmetrical about a predetermined axis. At the same time, when the first grip portion 20 and the second grip portion 30 are folded, a minimum distance between the second end portion 23 of the first grip portion 20 and the second end portion 33 of the second grip portion 30 may be zero. In this case, the steering wheel 100 may be completely accommodated in the lower trim panel of the instrument panel.

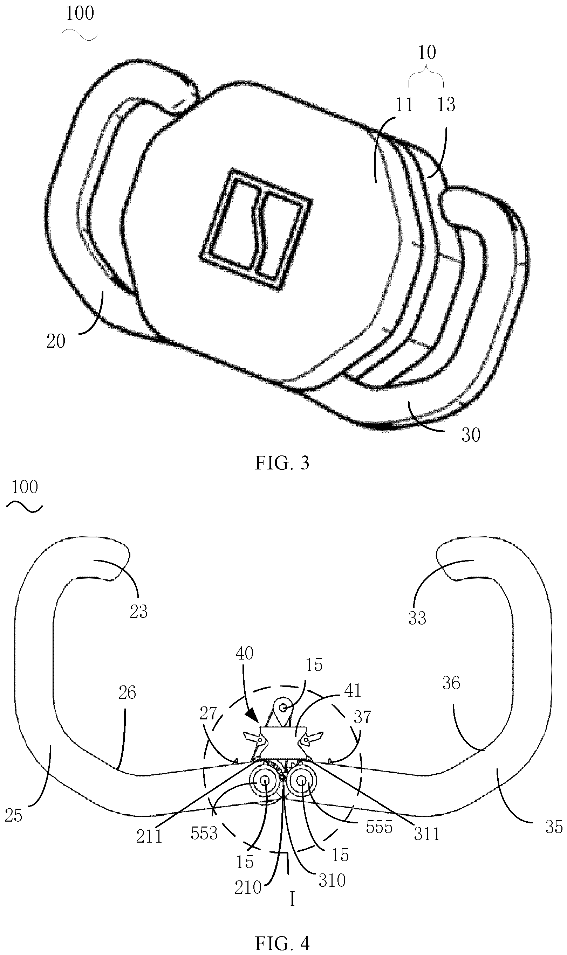

Referring to FIG. 3 and FIG. 4, in some embodiments, when the first grip portion 20 and the second grip portion 30 are in an unfolded state, the first end portion 21 of the first grip portion 20 and the first end portion 31 of the second grip portion 30 abut with each other to restrict the first grip portion 20 and the second grip portion 30 from moving in a direction along which the first grip portion 20 and the second grip portion 30 are further unfolded.

In this way, the first grip portion 20 and the second grip portion 30 may be restricted when unfolded to a specified distance.

In one embodiment, when unfolded to a specified distance, the first end portion 21 of the first grip portion 20 and the first end portion 31 of the second grip portion 30 tend to move in a direction along which the first grip portion 20 and the second grip portion 30 are further unfolded. The first end portion 21 of the first grip portion 20 and the first end portion 31 of the second grip portion 30 may include a first abutment portion 210 and a second abutment portion 310, respectively, and the first abutment portion 210 and the second abutment portion 310 may be completely attached to each other. Therefore, the first grip portion 20 and the second grip portion 30 are restricted from moving in the direction along which the first grip portion 20 and the second grip portion 30 are further unfolded. Further, each of the first abutment portion 210 and the second abutment portion 310 may be an engineering plastic to effectively reduce an abnormal sound generated during collision.

Referring to FIG. 2, FIG. 6, and FIG. 7, in some embodiments, when the first grip portion 20 and the second grip portion 30 are in a folded state, each of the first grip portion 20 and the second grip portion 30 is abutted against the manipulating body 10 to restrict the first grip portion 20 and the second grip portion 30 from moving in a direction along which the first grip portion 20 and the second grip portion 30 are further folded.

In this way, the first grip portion 20 and the second grip portion 30 are restricted when folded to a specified distance.

In one embodiment, the manipulating body 10 may include a flange, and the flange may include a first flange 16 disposed close to the first grip portion 20 and a second flange 17 disposed close to the second grip portion 30. The first grip portion 20 may include a first side surface 26, and the second grip portion 30 may include a second side surface 36. When the first grip portion 20 and the second grip portion 30 are in the folded state, the first flange 16 abuts with the first side surface 26, and the second flange 17 abuts with the second side surface 36. Thus, the first grip portion 20 and the second grip portion 30 are restricted from moving in the direction along which the first grip portion 20 and the second grip portion 30 are further folded.

Referring to FIG. 4, in some embodiments, the steering wheel 100 further includes a limit assembly 40 disposed at the manipulating body 10. The limit assembly 40 is connected to the first grip portion 20 and the second grip portion 30. When the first grip portion 20 and the second grip portion 30 are in the unfolded state, the first grip portion 20 and the second grip portion 30 are restricted from moving in a folding direction by the limit assembly 40. When the first grip portion 20 and the second grip portion 30 are in the folded state, the first grip portion 20 and the second grip portion 30 are restricted from moving in an unfolding direction by the limit assembly 40.

In this way, when the first grip portion 20 and the second grip portion 30 are in the unfolded state, the movement of the first grip portion 20 and the second grip portion 30 in the folding direction is restricted.

In one embodiment, the limit assembly 40 may be rotatably connected to the manipulating body 10 by the coupling 15. When the first grip portion 20 and the second grip portion 30 are in the unfolded state, the limit assembly 40 is configured to restrict the first grip portion 20 and the second grip portion 30 from moving in the folding direction through a structural limit. When the first grip portion 20 and the second grip portion 30 are in the folded state, the limit assembly 40 is configured to abut with the first side surface 26 of the first grip portion 20 and the second side surface 36 of the second grip portion 30 through the structural limit to restrict the first grip portion 20 and the second grip portion 30 from moving in the unfolding direction.

Referring to FIG. 4, in some embodiments, the limit assembly 40 includes a movable block 41 movable relative to the first grip portion 20 and the second grip portion 30. When the first grip portion 20 and the second grip portion 30 are in the unfolded state, the first grip portion 20 and the second grip portion 30 are restricted from moving in the folding direction by the movable block 41.

In this way, when the first grip portion 20 and the second grip portion 30 are in the unfolded state, the movable block 41 can restrict the first grip portion 20 and the second grip portion 30 from moving in the folding direction.

In one embodiment, the movable block 41 may move towards or away from the first grip portion 20 and the second grip portion 30 in an up-down direction shown in the figures. When the first grip portion 20 and the second grip portion 30 are in the unfolded state, the movable block 41 may move to a position close to the first end of the first grip portion 20 and the first end of the second grip portion 30 until the movable block 41 abuts with the first end of the first grip portion 20 and the first end of the second grip portion 30. Thus, the first grip portion 20 and the second grip portion 30 are restricted from moving in the folding direction.

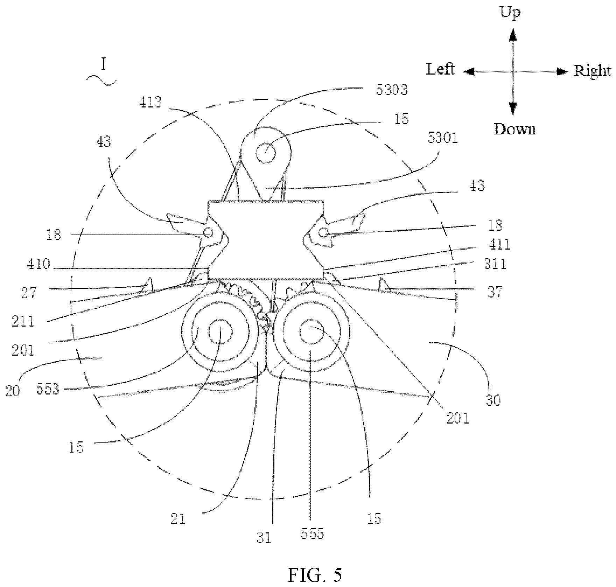

Referring to FIG. 4 and FIG. 5, in some embodiments, the first grip portion 20 is provided with a first limit portion 211 at the first end portion 21 of the first grip portion 20, and the second grip portion 30 is provided with a second limit portion 311 at the first end portion 31 of the second grip portion 30. When the first grip portion 20 and the second grip portion 30 are in the unfolded state, the movable block 41 is located between the first limit portion 211 and the second limit portion 311, and the first grip portion 20 and the second grip portion 30 are restricted from moving in the folding direction by the first limit portion 211, the second limit portion 311, and the movable block 41.

In this way, the movement of the first grip portion 20 and the second grip portion 30 in the folding direction can be restricted by the first limit portion 211, the second limit portion 311, and the movable block 41.

In one embodiment, the first limit portion 211 may be disposed at the first end portion 21 of the first grip portion 20 and protrude from the first side surface 26 of the first grip portion 20, and the second limit portion 311 may be disposed at the first end portion 31 of the second grip portion 30 and protrude from the second side surface 36 of the second grip portion 30.

The movable block 41 may include a first side wall 410 and a second side wall 411. When the first grip portion 20 and the second grip portion 30 are in the unfolded state, the movable block 41 is located between the first limit portion 211 and the second limit portion 311, that is, the first limit portion 211 and the second limit portion 311 abut with the first side wall 410 and the second side wall 411 of the movable block 41, respectively.

In another embodiment, the first limit portion 211 may be disposed at the first end portion 21 of the first grip portion 20 and recessed into the first side surface 26 of the first grip portion 20, and the second limit portion 311 may be disposed at the first end portion 31 of the second grip portion 30 and recessed into the second side surface 36 of the second grip portion 30.

A depth of the first limit portion 211 recessed into the first side surface 26 of the first grip portion 20 and a depth of the second limit portion 311 recessed into the second side surface 36 of the second grip portion 30 is smaller than a thickness of the first grip portion 20 and a thickness of the second grip portion 30, respectively. When the first grip portion 20 and the second grip portion 30 are in the unfolded state, the movable block 41 is located between the first limit portion 211 and the second limit portion 311, that is, the first side wall 410 and the second side wall 411 of the movable block 41 abut with the first limit portion 211 and the second limit portion 311, respectively.

It is worth noting that the structural shape of the first limit portion 211 and the structural shape of the second limit portion 311 are not limited in the present disclosure, as long as the first limit portion 211 and the second limit portion 311 can restrict the first grip portion 20 and the second grip portion 30 from moving in the folding direction when the first grip portion 20 and the second grip portion 30 are in the unfolded state.

Referring to FIG. 4 and FIG. 5, in some embodiments, the first limit portion 211 and/or the second limit portion 311 include a first protrusion.

In this way, when the first grip portion 20 and the second grip portion 30 are in the unfolded state, the first protrusion can restrict the first grip portion 20 and the second grip portion 30 from moving in the folding direction.

In one embodiment, the first protrusion may include a first abutment surface 201. When the first grip portion 20 and the second grip portion 30 are in the unfolded state, the movable block 41 moves towards the first end of the first grip portion 20 and the first end of the second grip portion 30 until the first side wall 410 and the second side wall 411 of the movable block 41 abut with the first abutment surface 201 of the first protrusion.

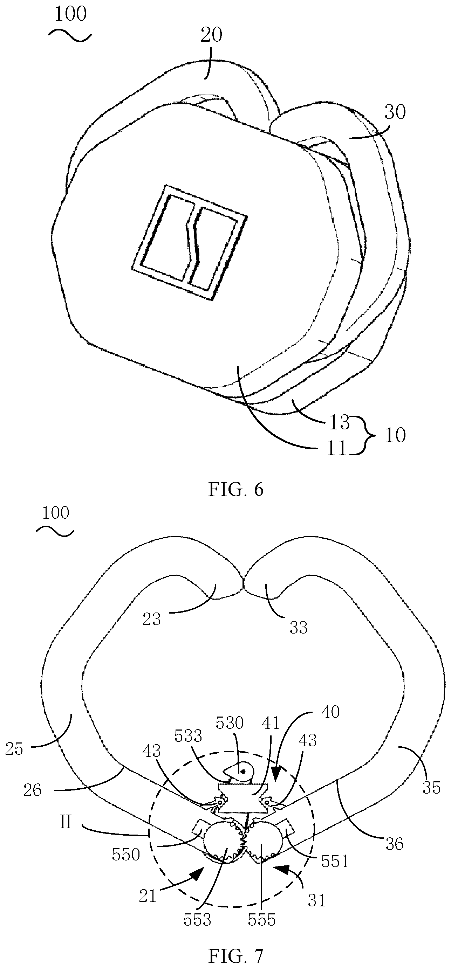

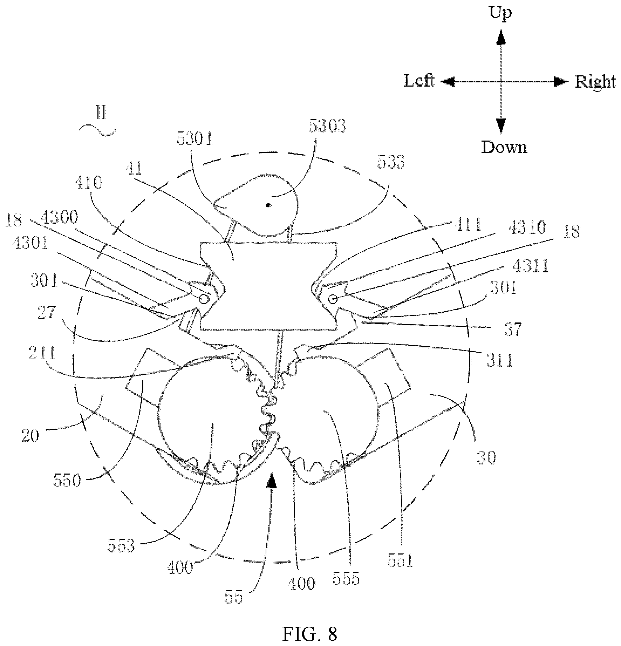

Referring to FIG. 7 and FIG. 8, in some embodiments, the limit assembly 40 further includes a swing arm 43 rotatably disposed at the manipulating body 10. The swing arm 43 is pushed to rotate by the movable block 41 during a movement of the movable block 41. The swing arm 43 is configured to restrict the first grip portion 20 and the second grip portion 30 from moving in the unfolding direction when the first grip portion 20 and the second grip portion 30 are in the folded state.

In this way, when the first grip portion 20 and the second grip portion 30 are in the folded state, the swing arm 43 can restrict the first grip portion 20 and the second grip portion 30 from moving in the unfolding direction.

In one embodiment, the swing arm 43 may include a mounting hole, the manipulating body 10 may include a round rod 18 passing through the mounting hole. The swing arm 43 may be rotatably connected to the manipulating body 10 through the round rod 18 and the mounting hole. The swing arm 43 may abut with the first side wall 410 and the second side wall 411 of the movable block 41, and may rotate with the movement of the movable block 41. When the first grip portion 20 and the second grip portion 30 are in the folded state, the swing arm 43 abuts with the first side surface 26 of the first grip portion 20 and the second side surface 36 of the second grip portion 30 to restrict the first grip portion 20 and the second grip portion 30 from moving in the unfolding direction.

Referring to FIG. 7, FIG. 8, and FIG. 9, in some embodiments, the swing arm 43 includes a first arm 430 and a second arm 431. The first arm 430 and the second arm 431 are arranged at two opposite sides of the movable block 41, respectively. The movable block 41 is configured to push the first arm 430 to rotate with an end of the first arm 430 close to the movable block 41 and push the second arm 431 to rotate with an end of the second arm 431 close to the movable block 41 during the movement of the movable block 41. The first grip portion 20 is provided with a third limit portion 27 spaced apart from the first limit portion 211, and the second grip portion 30 is provided with a fourth limit portion 37 spaced apart from the second limit portion 311. When the first grip portion 20 and the second grip portion 30 are in the folded state, an end of the first arm 430 away from the movable block 41 abuts with the third limit portion 27 to restrict the first grip portion 20 from moving in the unfolding direction, and an end of the second arm 431 away from the movable block 41 abuts with the fourth limit portion 37 to restrict the second grip portion 30 from moving in the unfolding direction.

In this way, when the first grip portion 20 and the second grip portion 30 are in the folded state, the first arm 430 and the second arm 431 can restrict the first grip portion 20 and the second grip portion 30 from moving in the unfolding direction, respectively.

In one embodiment, the swing arm 43 may include a first arm 430 and a second arm 431. The first arm 430 and the second arm 431 may be arranged at two opposite sides of the movable block 41, respectively. Each of the first arm 430 and the second arm 431 may be connected to the manipulating body 10 through the round rod 18 and the mounting hole. The first arm 430 may include a first end 4300 of the first arm 430, and the second arm 431 may include a first end 4310 of the second arm 431. During the movement of the movable block 41, the first side wall 410 and the second side wall 411 of the movable block 41 may push the first end 4300 of the first arm 430 and the first end 4310 of the second arm 431, respectively, to allow the first arm 430 and the second arm 431 to rotate around the round rod 18.

In one embodiment, the third limit portion 27 may be spaced apart from the first limit portion 211 and protrude from the first side surface 26 of the first grip portion 20, and the fourth limit portion 37 may be spaced apart from the second limit portion 311 and protrude from the second side surface 36 of the second grip portion 30.

In another embodiment, the third limit portion 27 may be spaced apart from the first limit portion 211 and recessed into the first side surface 26 of the first grip portion 20, and the fourth limit portion 37 may be spaced apart from the second limit portion 311 and recessed into the second side surface 36 of the second grip portion 30.

The first arm 430 may include a second end 4301 of the first arm 430, and the second arm 431 may include a second end 4311 of the second arm 431. When the first grip portion 20 and the second grip portion 30 are in the folded state, the second end 4301 of the first arm 430 abuts with the third limit portion 27 to restrict the first grip portion 20 from moving in the unfolding direction, and the second end 4311 of the second arm 431 abuts with the fourth limit portion 37 to restrict the second grip portion 30 from moving in the unfolding direction.

Referring to FIG. 7, FIG. 8, and FIG. 9, in some embodiments, the third limit portion 27 and/or the fourth limit portion 37 include a second protrusion.

In this way, when the first grip portion 20 and the second grip portion 30 are in the folded state, the second protrusion can restrict the first grip portion 20 and the second grip portion 30 from moving in the unfolding direction.

In one embodiment, the second protrusion may include a second abutment surface 301. When the first grip portion 20 and the second grip portion 30 are in the folded state, the movable block 41 pushes the first end 4300 of the first arm 430 and the first end 4310 of the second arm 431 to rotate, to drive the second end 4301 of the first arm 430 and the second end 4311 of the second arm 431 to rotate, respectively. The second end 4301 of the first arm 430 and the second end 4311 of the second arm 431 move in the unfolding direction of the first grip portion 20 and the second grip portion 30, to allow the second end 4301 of the first arm 430 and the second end 4311 of the second arm 431 to abut with the second abutment surface 301 of the second protrusion.

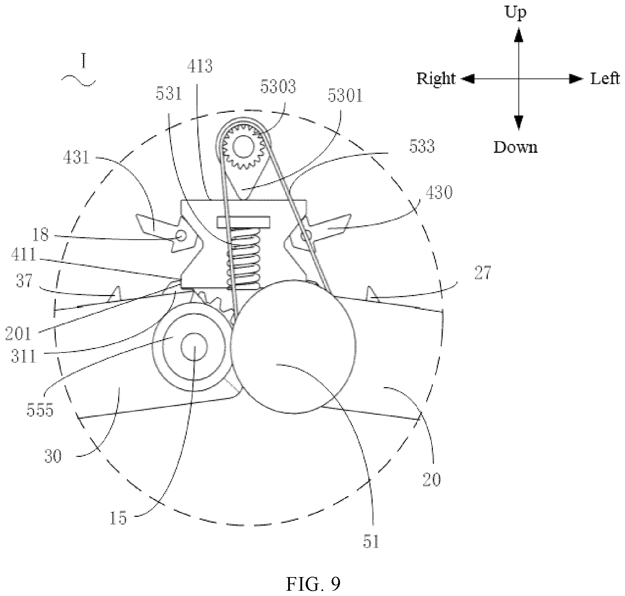

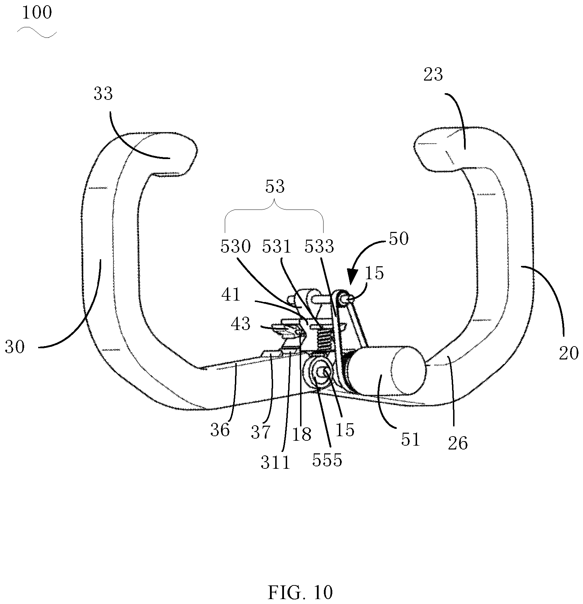

Referring to FIG. 9 and FIG. 10, in some embodiments, the steering wheel 100 includes a drive assembly 50. The drive assembly 50 includes a drive member 51 and a first transmission component 53. The drive member 51 is configured to drive the movable block 41 to move through the first transmission component 53.

In this way, the drive assembly 50 can drive the movable block 41 to move. As a result, the movable block 41 can restrict the positions of the first grip portion 20 and the second grip portion 30 in the different states.

In one embodiment, the drive assembly 50 may be disposed at the manipulating body 10 through the coupling 15, and the drive assembly 50 may be configured to drive the movable block 41 to move to restrict the positions of the first grip portion 20 and the second grip portion 30 in the different states. The drive member 51 may be any motor or a customized motor available in the related art. A specific model of the drive member 51 is not limited in the present disclosure. The drive member 51 only needs to be able to drive the steering wheel 100 to be unfolded or folded to the specified position within the predetermined range. The drive member 51 may drive the first transmission component 53 to move in different directions through a forward rotation and reverse rotation of the drive member 51.

Referring to FIG. 8, FIG. 9, and FIG. 10, in some embodiments, the first transmission component 53 includes a cam 530, an elastic member 531, and a belt mechanism 533. The belt mechanism 533 is connected to the drive member 51 and the cam 530. The drive member 51 is configured to drive the cam 530 to rotate through the belt mechanism 533, to allow the cam 530 and the elastic member 531 to cooperate with each other to drive the movable block 41 to move.

In this way, the movable block 41 is driven to move by the first transmission component 53. As a result, the movable block 41 can restrict the positions of the first grip portion 20 and the second grip portion 30 in the different states.

In one embodiment, when the first grip portion 20 and the second grip portion 30 are in the folded state, the cam 530 is spaced apart from the movable block 41, and the elastic member 531 is fixedly connected to the movable block 41. In this case, the elastic member 531 applies an upward force to the movable block 41, and therefore the movable block 41 moves upwards to push the first end 4300 of the first arm 430 and the first end 4310 of the second arm 431 to rotate, which in turn drives the second end 4301 of the first arm 430 and the second end 4311 of the second arm 431 to rotate, until the second end 4301 of the first arm 430 and the second end 4311 of the second arm 431 abut with the third limit portion 27 and the fourth limit portion 37, respectively. Thus, the first grip portion 20 and the second grip portion 30 are restricted from moving in the unfolding direction. The elastic member 531 may be a component in the related art or a customized component, and the type of the elastic member 531 is not limited in the present disclosure.

The cam 530 may include a protruding end 5301 and a cam body 5303, and the movable block 41 may include a top surface 413. When the first grip portion 20 and the second grip portion 30 are in the unfolded state, the cam 530 is connected to the belt mechanism 533, and the drive member 51 drives the cam 530 to rotate through the belt mechanism 533. The protruding end 5301 of the cam 530 abuts against the top surface 413 of the movable block 41, and therefore the movable block 41 moves downwards. Then, the movable block 41 abuts against the first grip portion 20 and the second grip portion 30 to restrict the first grip portion 20 and the second grip portion 30 from moving in the folding direction. The belt mechanism 533 may be a component in the related art or a customized component, and the type of the belt mechanism 533 is not limited in the present disclosure.

Referring to FIG. 8 and FIG. 10, in some embodiments, the drive assembly 50 further includes a second transmission component 55. The first grip portion 20 and the second grip portion 30 is driven to be unfolded or folded by the drive member 51 through the second transmission component 55 when the drive member 51 drives the movable block 41 to move.

In this way, the second transmission component 55 can drive the first grip portion 20 and the second grip portion 30 to be unfolded or folded.

In one embodiment, the second transmission component 55 may be connected to the drive member 51 by the coupling 15, and the drive member 51 may be configured to drive the second transmission component 55 through the coupling 15. The second transmission component 55 may include a first protruding block 550 and a second protruding block 551. The first protruding block 550 may be embedded in the first grip portion 20, and the second protruding block 551 may be embedded in the second grip portion 30. As a result, when the first protruding block 550 and the second protruding block 551 rotate, the first grip portion 20 and the second grip portion 30 may be driven to rotate. Then, the second transmission component 55 may in turn drive the first grip portion 20 and the second grip portion 30 to be unfolded or folded.

Referring to FIG. 8 and FIG. 9, in some embodiments, the second transmission component 55 includes a first gear 553 and a second gear 555. The first gear 553 is mounted at the first end portion 21 of the first grip portion 20 and connected to the drive member 51. The second gear 555 is mounted at the first end portion 31 of the second grip portion 30 and meshed with the first gear 553.

In this way, the first grip portion 20 and the second grip portion 30 can be unfolded or folded by meshing the first gear 553 with the second gear 555.

In one embodiment, the drive member 51 may drive the first gear 553 to rotate through the coupling 15, and the first gear 553 may be connected to the belt mechanism 533 and may drive the cam 530 to rotate through the belt mechanism 533. At the same time, the first gear 553 drives the second gear 555 to rotate synchronously by meshing the first gear 553 with the second gear 555. Further, the first gear 553 may include gear teeth 400 facing away from the first grip portion 20, and the second gear 555 may include gear teeth 400 facing away from the second grip portion 30. The gear teeth 400 are arranged on a circumference of each of the first gear 553 and the second gear 555 and do not exceed beyond 1/2 of the circumference.

The first protruding block 550 may be disposed at an end of the first gear 553 facing away from the gear teeth 400, and the second protruding block 551 may be disposed at an end of the second gear 555 facing away from the gear teeth 400. The first protruding block 550 and the second protruding block 551 are connected to the first gear 553 and the second gear 555, respectively. The first protruding block 550 and the first gear 553 may be integrally formed, and the second protruding block 551 and the second gear 555 may be integrally formed. The first gear 553 and the second gear 555 drive the first protruding block 550 and the second protruding block 551 to rotate, respectively, and the first protruding block 550 and the second protruding block 551 rotate to drive the first grip portion 20 and the second grip portion 30 to rotate, respectively. Thus, the second transmission component 55 may drive the first grip portion 20 and the second grip portion 30 to be unfolded or folded.

It is worth noting that in the present disclosure, the belt mechanism 533 is not limited to be connected only to the first gear 553. Alternatively, the belt mechanism 533 may be connected to any one of the first gear 553 and the second gear 555, as long as the first grip portion 20 and the second grip portion 30 can be unfolded or folded. At the same time, the transmission structure of the drive assembly 50 is not limited in the present disclosure. For example, the belt mechanism 533 may be replaced with several driving and driven gears meshing with each other, to drive the cam 530 to rotate to allow the movable block 41 to move upwards and downwards, and further to drive the first grip portion 20 and the second grip portion 30 to be unfolded or folded.

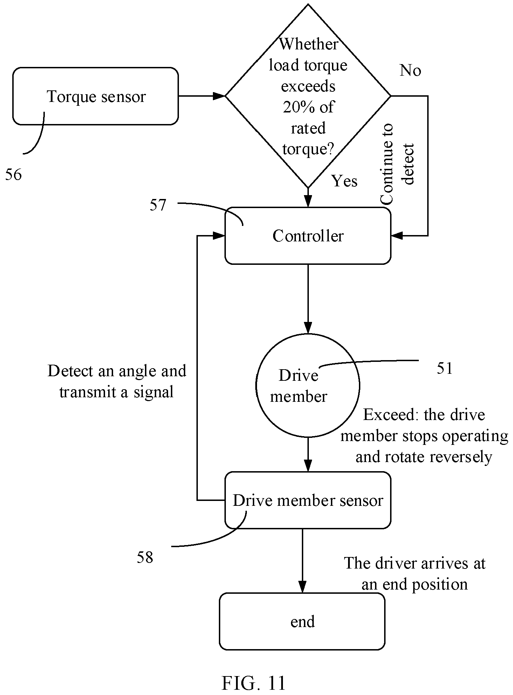

Referring to FIG. 2, FIG. 5, FIG. 8, FIG. 9, and FIG. 11, in some embodiments, the drive member 51 stops operating and rotates reversely when load torque of the drive member 51 exceeds 20% of rated torque.

In this way, the steering wheel 100 can have an anti-pinch function and prevent the drive member 51 from stalling.

In one embodiment, the drive assembly 50 may further include a torque sensor 56, a controller 57, and a drive member sensor 58. When the torque sensor 56 detects that the load torque of the drive member 51 exceeds 20% of the rated torque, the torque sensor 56 transmits information to the controller 57 in real time, and the controller 57 outputs an instruction to the drive member 51 to allow the drive member 51 to stop operating and reversely move back to the initial position. At the same time, the drive member sensor 58 feeds back the position of the drive member 51 to the controller 57, thereby realizing the anti-pinch function and preventing a motor from stalling to protect the motor.

When the first grip portion 20 and the second grip portion 30 are unfolded, the drive member 51 may rotate counterclockwise and drive the first gear 553 to drive the cam 530 to rotate through the belt mechanism 533. When the cam 530 rotates to a predetermined position, the protruding end 5301 abuts against the top surface 413 of the movable block 41, allowing the movable block 41 to move downwards until the movable block 41 abuts against the first limit portion 211 and the second limit portion 311. In this way, the first grip portion 20 and the second grip portion 30 are restricted from moving in the folding direction.

At the same time, the first gear 553 drives the second gear 555 to rotate, which in turn drives the first protruding block 550 and the second protruding block 551 to rotate. As the first protruding block 550 and the second protruding block 551 rotate, the first protruding block 550 and the second protruding block 551 may drive the first grip portion 20 and the second grip portion 30 to rotate, until the first abutment portion 210 and the second abutment portion 310 are completely attached to each other. In this way, the first grip portion 20 and the second grip portion 30 are restricted from moving in the unfolding direction.

When the first grip portion 20 and the second grip portion 30 are folded, the drive member 51 may rotate clockwise and drive the first gear 553 to drive the cam 530 to rotate through the belt mechanism 533. When the cam 530 rotates to a predetermined position, the protruding end 5301 is disengaged from the top surface 413 of the movable block 41, and therefore the movable block 41 moves upwards under the action of the elastic member 531.

At the same time, the elastic member 531 applies an upward force to the movable block 41, to allow the first side wall 410 and the second side wall 411 of the movable block 41 to push the first end 4300 of the first arm 430 and the first end 4310 of the second arm 431, respectively. As a result, the first arm 430 and the second arm 431 may rotate around the round rod 18, which in turn drives the second end 4301 of the first arm 430 and the second end 4311 of the second arm 431 to rotate, until the second end 4301 of the first arm 430 and the second end 4311 of the second arm 431 abut with the third limit portion 27 and the fourth limit portion 37, respectively. In this way, the first grip portion 20 and the second grip portion 30 are restricted from moving in the unfolding direction.

At the same time, the first gear 553 drives the second gear 555 to rotate, which in turn drives the first protruding block 550 and the second protruding block 551 to rotate. As the first protruding block 550 and the second protruding block 551 rotate, the first protruding block 550 and the second protruding block 551 may drive the first grip portion 20 and the second grip portion 30 to rotate, until the first flange 16 abuts with the first side surface 26 and the second flange 17 abuts with the second side surface 36. In this way, the first grip portion 20 and the second grip portion 30 are restricted from moving in the folding direction.

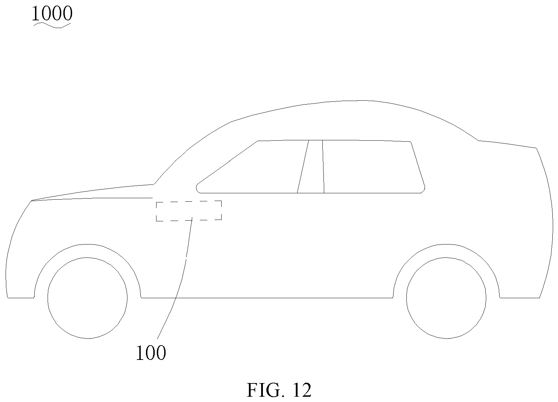

Referring to FIG. 8 to FIG. 12, a vehicle 1000 of the present disclosure includes the steering wheel 100 according to any one of the above-mentioned embodiments.

In this way, a space occupied by the steering wheel 100 in the vehicle 1000 is greatly reduced, which facilitates improving the driver's driving experience.

In one embodiment, the vehicle 1000 may be a vehicle. When the vehicle is started, the steering wheel 100 is extended from a lower trim panel of an instrument panel. When the steering wheel 100 is extended to 20% of a stroke from a nominal position (or a memory position) of the steering wheel 100, an unfolding function of the steering wheel 100 is activated (i.e., the first grip portion 20 and the second grip portion 30 move in the unfolding direction). It can be understood that the nominal position of the steering wheel 100 refers to an initial position of the steering wheel 100 mounted in the lower trim panel of the instrument panel, and the 20% of the stroke may be 20% of the entire extension stroke of the steering wheel 100 extending from the lower trim panel of the instrument panel. The drive member 51 may drive the first gear 553 to rotate through the coupling 15, and therefore the first gear 553 in turn drives the second gear 555 to rotate. Thus, the first grip portion 20 and the second grip portion 30 are unfolded.

When the vehicle is turned off, the drive member 51 may, through the coupling 15, drive the first gear 553 to rotate reversely, differently from the rotation during the starting of the vehicle, and therefore the first gear 553 in turn drives the second gear 555 to rotate. Thus, the first grip portion 20 and the second grip portion 30 are folded, and finally the steering wheel 100 is accommodated into the lower trim panel of the instrument panel.

In the description of this specification, descriptions with reference to the terms "an embodiment", "some embodiments", "an exemplary embodiment", "an example", "a specific example", or "some examples" etc., mean that specific features, structure, materials or characteristics described in conjunction with the embodiment or example are included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A steering wheel, comprising:
a manipulating body; and
a first grip portion and a second grip portion, each of the first grip portion and the second grip portion having two end portions opposite to each other, a first end portion of the first grip portion and a first end portion of the second grip portion being arranged adjacent to each other and both rotatably connected to the manipulating body, wherein:
when the first grip portion and the second grip portion are unfolded, a second end portion of the first grip portion and a second end portion of the second grip portion move away from each other; and
when the first grip portion and the second grip portion are folded, the second end portion of the first grip portion and the second end portion of the second grip portion move towards each other.

2. The steering wheel according to claim 1, wherein when the first grip portion and the second grip portion are in an unfolded state, the first end portion of the first grip portion and the first end portion of the second grip portion abut with each other to restrict the first grip portion and the second grip portion from moving in a direction along which the first grip portion and the second grip portion are further unfolded.

3. The steering wheel according to claim 1, wherein when the first grip portion and the second grip portion are in a folded state, each of the first grip portion and the second grip portion is abutted against the manipulating body to restrict the first grip portion and the second grip portion from moving in a direction along which the first grip portion and the second grip portion are further folded.

4. The steering wheel according to claim 1, further comprising a limit assembly disposed at the manipulating body, the limit assembly being connected to the first grip portion and the second grip portion, wherein:
when the first grip portion and the second grip portion are in an unfolded state, the first grip portion and the second grip portion are restricted from moving in a folding direction by the limit assembly; and
when the first grip portion and the second grip portion are in a folded state, the first grip portion and the second grip portion are restricted from moving in an unfolding direction by the limit assembly.

5. The steering wheel according to claim 4, wherein the limit assembly comprises a movable block movable relative to the first grip portion and the second grip portion, the first grip portion and the second grip portion being restricted from moving in the folding direction by the movable block when the first grip portion and the second grip portion are in the unfolded state.

6. The steering wheel according to claim 5, wherein:
the first grip portion is provided with a first limit portion at the first end portion of the first grip portion, and the second grip portion is provided with a second limit portion at the first end portion of the second grip portion; and
when the first grip portion and the second grip portion are in the unfolded state, the movable block is located between the first limit portion and the second limit portion, and the first grip portion and the second grip portion are restricted from moving in the folding direction by the first limit portion, the second limit portion, and the movable block.

7. The steering wheel according to claim 6, wherein the first limit portion and/or the second limit portion comprises a first protrusion.

8. The steering wheel according to claim 6, wherein the limit assembly further comprises a swing arm rotatably disposed at the manipulating body, the swing arm being pushed to rotate by the movable block during a movement of the movable block, and the swing arm being configured to restrict the first grip portion and the second grip portion from moving in the unfolding direction when the first grip portion and the second grip portion are in the folded state.

9. The steering wheel according to claim 8, wherein:
the swing arm comprises a first arm and a second arm that are respectively arranged at two opposite sides of the movable block, the movable block being configured to push the first arm to rotate with an end of the first arm close to the movable block and push the second arm to rotate with an end of the second arm close to the movable block during the movement of the movable block;
the first grip portion is further provided with a third limit portion spaced apart from the first limit portion, and the second grip portion is further provided with a fourth limit portion spaced apart from the second limit portion; and
when the first grip portion and the second grip portion are in the folded state, an end of the first arm away from the movable block abuts with the third limit portion to restrict the first grip portion from moving in the unfolding direction, and an end of the second arm away from the movable block abuts with the fourth limit portion to restrict the second grip portion from moving in the unfolding direction.

10. The steering wheel according to claim 9, wherein the third limit portion and/or the fourth limit portion comprises a second protrusion.

11. The steering wheel according to claim 5, further comprising a drive assembly, the drive assembly comprising a drive member and a first transmission component, the drive member being configured to drive the movable block to move through the first transmission component.

12. The steering wheel according to claim 11, wherein the first transmission component comprises a cam, an elastic member, and a belt mechanism connected to the drive member and the cam, the drive member being configured to drive the cam to rotate through the belt mechanism, to allow the cam and the elastic member to cooperate with each other to drive the movable block to move.

13. The steering wheel according to claim 11, wherein the drive assembly further comprises a second transmission component, the first grip portion and the second grip portion being driven to be unfolded or folded by the drive member through the second transmission component when the drive member drives the movable block to move.

14. The steering wheel according to claim 13, wherein the second transmission component comprises:
a first gear mounted at the first end portion of the first grip portion and connected to the drive member; and
a second gear mounted at the first end portion of the second grip portion and meshed with the first gear.

15. The steering wheel according to claim 13, wherein the drive member stops operating and rotates reversely when load torque of the drive member exceeds 20% of rated torque.

16. A vehicle, comprising the steering wheel according to any one of claims 1 to 15.
